# DEMANDE DE BREVET EUROPEEN

(11) **EP 0 806 856 A1**
(43) Date de publication de la demande: **12.11.1997**
(21) Numéro de dépôt: 97400882.3
(22) Date de dépôt: 21.04.1997
(51) Int. Cl.: H04L 29/06

(54) **Equipement d'adaptation de protocole pour poste téléphonique**

(30) Priorité: 24.04.1996 FR 9605162
(71) Demandeur: ALCATEL BUSINESS SYSTEMS, F-75008 Paris (FR)
(72) Inventeur: Lecomte, Daniel, 75116 Paris (FR)
(74) Mandataire: Scheer, Luc

(57) **Abrégé**

Equipement d'adaptation de protocole pour poste téléphonique comportant une unité de traitement (14) disposant de moyens matériels et logiciels agencés pour permettre au poste téléphonique de fonctionner selon un protocole de communication en mode circuit par l'intermédiaire d'une liaison de communication (3) d'un réseau téléphonique (4), ainsi que poste doté d'un tel équipement.

L'équipement comporte un coupleur (18) lui permettant de fonctionner en mode paquet via la liaison de communication en plus du coupleur (17) lui permettant de fonctionner en mode circuit, ces deux coupleurs étant reliés à ladite liaison de communication via un organe d'aiguillage sélectif (16) et étant régis par l'unité de traitement du poste qui dispose à cet effet de moyens incluant un gestionnaire de protocole en mode paquet (20) en plus d'un gestionnaire de protocole en mode circuit (19).

## Description

L'invention concerne un équipement d'adaptation de protocole pour poste téléphonique, notamment de type à répondeur, et un poste doté d'un tel équipement qui est plus particulièrement destiné à permettre la prise en compte de signaux sonores numérisés transmis selon des protocoles différents et notamment selon un protocole de communication par circuit et un protocole de communication par paquet, tel que par exemple en vigueur sur le réseau Internet.

Comme il est connu les postes téléphoniques sont généralement destinés à être connectés à des lignes de réseaux téléphoniques à commutation de circuit, usuellement désignés par l'acronyme RTC, qui transmettent les sons et notamment la parole sous forme de signaux analogiques ou de plus en plus sous forme de signaux numériques sur au moins une partie du trajet suivi par ces signaux, chaque communication impliquant l'établissement d'un circuit déterminé pour la durée de communication. De manière usuelle, les signaux sonores à transmettre à partir d'une source sous une forme numérique sont préalablement échantillonnés et codés selon un procédé standardisé, usuellement au niveau de la partie codeuse d'un codec. La transmission des échantillons obtenus s'effectue de manière périodique échantillon par échantillon, lorsque ceux-ci sont transmis par l'intermédiaire d'un réseau téléphonique numérique où la communication est de type circuit.

Par ailleurs, il existe des terminaux conçus pour communiquer des données mises sous forme numérique et groupées par paquets, ils peuvent pour certains émettre et/ou recevoir des données correspondant à des signaux sonores numérisés et ils sont parfois agencés pour être connectés aux mêmes liaisons que les postes téléphoniques.

Tels sont notamment les ordinateurs personnels dotés de moyens leur permettant de communiquer avec d'autres terminaux de données distants et en particulier avec d'autres ordinateurs, tels que ceux de serveurs, via une liaison qui les rattachent à un réseau permettant une transmission de données en asynchrone par paquets, cette liaison étant éventuellement une liaison téléphonique, de type analogique, si l'ordinateur est doté de moyens incluant un modem.

La transmission en asynchrone de données numériques par paquet qui peut être assurée de bout en bout par des liaisons spécialisées est donc aussi susceptible d'être au moins localement assurée par des liaisons du réseau téléphonique commuté qui sont régies de manière synchrone.

Les codecs exploités dans les postes téléphoniques pour le traitement numérique des signaux sonores, notamment ceux correspondant à des signaux de parole, et les modems téléphoniques exploités pour la conversion des signaux numériques de données sont souvent connectés aux mêmes liaisons téléphoniques . Toutefois ces codecs et modems ne permettent généralement pas aux appareils qu'ils desservent respectivement de communiquer entre eux dans la mesure où les signalisations qu'ils exploitent respectivement et les protocoles de communication qu'ils mettent en oeuvre sont dans la pratique au moins partiellement exclusifs, bien qu'étant techniquement compatibles.

De manière plus générale en raison des différences existant entre les protocoles de communication par l'intermédiaire de circuits et par l'intermédiaire de paquets il n'est généralement pas possible de faire communiquer des appareils dont l'un utilise un protocole de communication par circuit et l'autre un protocole de communication par paquets.

Par ailleurs il est classique d'associer un appareil ou un équipement répondeur et/ou enregistreur à un poste téléphonique pour permettre aux utilisateurs de ce dernier de faire transmettre un message sonore à ceux qui appellent le poste par voie téléphonique et d'enregistrer les éventuels messages sonores transmis au poste par ceux qui ont appelé.

Une telle opération est aussi possible avec les appareils tels que des ordinateurs qui sont conçus pour communiquer entre eux des données groupées par paquets, puisque des signaux sonores numérisés peuvent être aussi être transmis sous cette forme, tel peut être le cas notamment pour les ordinateurs reliés au réseau dit Internet.

De ce fait, l'utilisateur d'un ordinateur convenablement équipé peut disposer d'une fonction répondeur et/ou enregistreur de messages sonores.

Les postes téléphoniques exploitant un protocole de communication par circuit et les ordinateurs exploitant un protocole de communication par paquets ne permettent cependant pas à un utilisateur disposant d'un téléphone et d'un ordinateur disposant l'un et/ou l'autre d'une fonction répondeur-enregistreur de consulter les messages sonores laissés par d'autres utilisateurs dans son ordinateur à l'aide de son téléphone et/ou réciproquement.

Ceci peut être particulièrement gênant pour une personne en déplacement ayant accès à un réseau de communication par un appareil qui lui permet d'appeler l'appareil où se trouve les messages enregistrés pour lui mais qui ne permet pas une réelle communication en raison des incompatibilités existant entre les protocoles de communication mis en application par les appareils utilisés.

L'invention propose donc un équipement d'adaptation de protocole pour poste téléphonique comportant une unité de traitement disposant de moyens matériels et logiciels agencés pour permettre au poste téléphonique de fonctionner selon un protocole de communication en mode circuit par l'intermédiaire d'une liaison de communication d'un réseau téléphonique.

Selon une caractéristique de l'invention, l'équipement d'adaptation comporte un coupleur lui permettant de fonctionner en mode paquet via la liaison de communication en plus du coupleur permettant au poste de fonctionner en mode circuit, ces deux coupleurs étant reliés à ladite liaison de communication via un organe d'aiguillage sélectif et étant régis par l'unité de traitement du poste qui dispose à cet effet de moyens incluant un gestionnaire de protocole en mode paquet en plus d'un gestionnaire de protocole en mode circuit du poste.

Selon une autre caractéristique de l'invention, l'équipement d'adaptation comporte un coupleur lui permettant de fonctionner en liaison avec un réseau numérique asynchrone de type Internet et un gestionnaire de protocole correspondant.

Selon encore une autre caractéristique de l'invention, l'équipement d'adaptation comporte au moins une mémoire de messages sonores incorporée ou non dans l'ensemble de mémoires de l'unité de traitement du poste qui comporte cet équipement, ladite mémoire recevant préférablement sous une même forme les données de message sonore quel que soit le protocole mis en oeuvre et/ou à mettre en oeuvre pour leur transmission.

L'invention concerne aussi un poste téléphonique comportant une unité de traitement disposant de moyens matériels et logiciels agencés pour permettre au poste téléphonique de fonctionner selon un protocole de communication en mode circuit par l'intermédiaire d'une liaison de communication d'un réseau téléphonique.

Selon une caractéristique de l'invention, ce poste est, caractérisé en ce qu'il comporte un agencement ayant au moins l'une des caractéristiques définies ci-dessus.

L'invention, ses caractéristiques et ses avantages sont précisés dans la description qui suit en liaison avec la figure unique évoquée ci-dessous qui présente un schéma d'un poste téléphonique selon l'invention dans son environnement de communication.

Le poste téléphonique 1 présenté sur la figure unique est supposé relié à un réseau de communication 2 par une liaison téléphonique 3 qui est par exemple une classique ligne téléphonique de réseau téléphonique commuté, si tel est le réseau 2, ou encore une liaison d'accès primaire de réseau numérique à intégration de services, si tel est alors le réseau 2.

Comme connu, le réseau de communication 2 est susceptible de pouvoir desservir un nombre usuellement élevé de liaisons de communication et notamment des liaisons telles que la liaison téléphonique 3.

Le réseau de communication 2 est ici supposé comporter au moins un sous-ensemble 4 constituant un réseau téléphonique exploitant un protocole de communication par circuit dont éventuellement une partie est de type réseau numérique synchrone où les signaux de parole sont transmis sous forme d'échantillons codés multiplexés dans le temps et un sous-ensemble 5 de type réseau numérique asynchrone exploitant un protocole de communication où les données sont transmises par paquets, ces paquets de données étant susceptibles de contenir des signaux sonores numérisés et en particulier des signaux de parole. Les sous-ensembles 4 et 5 et leur interconnexion symbolisée par une liaison 6 ne seront pas développés ici dans la mesure où d'une part les réseaux téléphoniques commutés et d'autre part les réseaux numériques asynchrones et plus particulièrement le réseau Internet sont connus de l'homme de métier et où d'autre part ils ne font pas eux-mêmes partis de la présente invention.

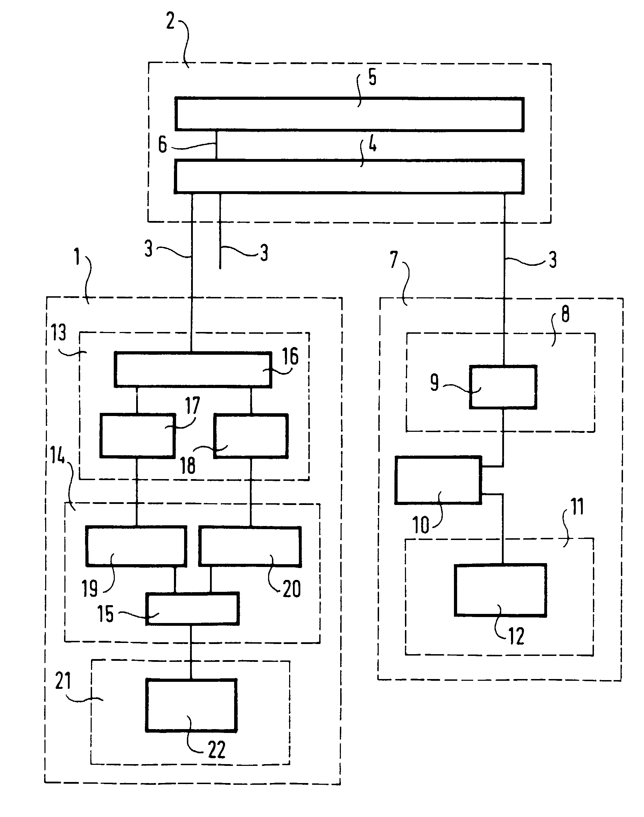

Un ordinateur personnel 7 est aussi symbolisé sur la figure 1, il est supposé doté d'une interface de communication 8, interne ou externe, lui permettant par exemple de se relier à une liaison téléphonique 3 par l'intermédiaire d'un coupleur 9. Ce coupleur est par exemple de type modem si la liaison de communication 3 est de type ligne téléphonique analogique, il peut alternativement être de type carte ou boîtier d'accès numérique si la liaison de communication 3 est une liaison de réseau numérique à intégration de services.

L'interface de communication 8 est alors du type de celles, couramment commercialisées, qui permettent à un utilisateur de l'ordinateur 7 d'émettre un numéro d'appel de type téléphonique afin de se mettre en communication pour un transfert de données par l'intermédiaire du coupleur 9 avec un autre appareil relié au réseau de communication 4 et lui-même doté de moyens de mise en communication correspondants. Comme connu une telle interface de communication permet usuellement, à l'ordinateur 7 qu'elle équipe, d'être lui-même appelé par voie téléphonique par l'intermédiaire de la liaison de communication 3 à laquelle cette interface est reliée pour un transfert de données de même type que celui évoqué ci-dessus. Le transfert lui-même s'effectue par paquet selon le protocole de communication par paquet choisi par exemple le protocole désigné par l'acronyme TCP/IP dans le cas du réseau Internet sous sa forme actuelle.

L'ordinateur 7 ici envisagé est supposé comporter une unité de traitement 10 organisée autour d'au moins un processeur dûment programmé, comme connu, ceci n'étant pas représenté. Dans la réalisation envisagée, l'ordinateur 7 dispose de moyens matériels et logiciels lui permettant de fonctionner en tant que répondeur et/ou enregistreur pour des messages sonores et notamment vocaux transmis sous forme de paquets de données via le coupleur 9 qui l'équipe. Ces moyens matériels et logiciels sont ici référencés 11 et ils comportent au moins un élément de mémoire 12 pour les données des messages à émettre et/ou recevoir, cet élément de mémoire étant susceptible, comme il est connu, d'être localisée soit dans l'ensemble mémoire non représenté que comporte l'unité de traitement 10, soit encore dans une unité indépendante.

L'utilisateur d'un tel ordinateur est susceptible de vouloir consulter les messages envoyés pour lui à cet ordinateur par d'autres personnes, sous forme de paquets de données via la liaison de communication 3 reliant cet ordinateur au réseau de communication 2, alors que lui utilisateur n'est pas sur le lieu où se trouve l'ordinateur 7 et n'a pas à sa disposition un ordinateur susceptible de permettre une consultation à distance.

Il est donc prévu de modifier les postes téléphoniques pour leur permettre d'assurer de telles consultations de manière à ce qu'un utilisateur puisse consulter les messages sonores laissés pour lui par d'autres utilisateurs sur un appareil doté d'une fonction répondeur et/ou enregistreur tant si cette fonction est assurée par un téléphone dont il dispose en un lieu donné que si cette fonction est assurée par un ordinateur dont il dispose aussi éventuellement en ce même lieu.

A cet effet, le poste téléphonique 1 selon l'invention comporte un équipement d'adaptation incluant une interface de raccordement 13, dite de réseau, par l'intermédiaire de laquelle il est susceptible d'être raccordé à une liaison de communication 3 lui donnant accès au réseau de communication 2. Par ailleurs comme de nombreux autres, ce poste téléphonique comporte une unité de commande 14 organisée autour d'au moins un processeur 15 dûment programmé. Cette unité de commande dispose de moyens matériels et logiciels agencés pour permettre au poste téléphonique de fonctionner de manière habituelle selon un protocole de communication en mode circuit. Elle dispose aussi de moyens matériels et logiciels agencés pour permettre au poste téléphonique 1 de communiquer selon un protocole de communication en mode paquet par exemple avec un ordinateur.

Les moyens matériels associés à une unité de commande 14 dans l'équipement d'adaptation évoqué plus haut d'un poste téléphonique 1 comportent notamment un organe d'aiguillage sélectif 16 destiné à relier le poste à une liaison de communication 3, cet organe desservant d'une part un coupleur 17 lui permettant de fonctionner en mode circuit et d'autre part un coupleur 18 lui permettant de fonctionner en mode paquet.

Le coupleur 17 qui peut physiquement être associé à l'organe d'aiguillage sélectif 16 dans un même circuit est de type interface téléphonique classique de réseau commuté ou éventuellement de réseau numérique à intégration de services il permet une communication téléphonique en duplex complet. Le coupleur 18 est lui aussi susceptible d'être de type classique, il est ici supposé permettre l'émission et la réception de données, par exemple par voie téléphonique via un modem non représenté, après mise en communication avec un appareil compatible, via la liaison de communication 3 et le réseau de communication 2.

Comme il est connu lorsque le coupleur 17 est mis en oeuvre, le décrochage du poste ou terminal téléphonique appelé ou une opération correspondante à réception d'une signal correspondant à une sonnerie d'appel se traduit par l'établissement immédiat d'une communication de type full duplex entre appelant et appelé. Comme il est aussi connu, lorsqu'un modem téléphonique est mis en oeuvre, l'opération correspondant à un décrochage à réception d'un signal correspondant à une sonnerie d'appel se traduit par l'envoi d'une tonalité audible destinée à permettre à l'appelant de poursuivre les échanges d'indications qui doivent nécessairement être réalisés préalablement à une transmission de données vers l'appelé ou depuis ce dernier.

Pour assurer ces diverses opérations l'équipement d'adaptation d'un poste 1 associe au gestionnaire de protocole en mode circuit 19 contenu dans l'unité de traitement 14 de ce poste, un gestionnaire de protocole en mode paquet 20, ces gestionnaires étant respectivement chargés du déroulement des opérations qui impliquent sélectivement soit le coupleur 17, soit le coupleur 18.

Comme il est connu ces gestionnaires sont essentiellement constitués sous forme logicielle et sont ici supposés exploités par le processeur 15 de l'unité de traitement 14.

Le gestionnaire de mode paquet 20 est par exemple agencé de manière à permettre l'échange de données par l'intermédiaire du réseau Internet, étant entendu que ces données sont susceptibles de servir à transmettre des signaux sonores et notamment des signaux de parole.

Dans le cas d'un poste téléphonique 1 supposé susceptible de fonctionner en tant que répondeur et/ou enregistreur , ce poste dispose donc d'un dispositif 21 correspondant comportant au moins une mémoire de messages sonores 22 incorporée ou non dans l'ensemble de mémoires, non représenté, associé au processeur 15. Les moyens permettant au dispositif 21 d'assurer les fonctions de répondeur et/ou d'enregistreur pour le poste qui sont susceptibles d'être essentiellement de type logiciel mis à part la mémoire 22 sont mis en oeuvre par le processeur 15 ou éventuellement par un processeur ou tout au moins une logique auxiliaire non représentés.

La dépose d'un message en mémoire de messages 22 du poste téléphonique 1 par un utilisateur distant via la liaison de communication 3 auquel est relié ce poste est ainsi susceptible d'être réalisée soit à partir d'un autre poste ou terminal téléphonique relié au sous-ensemble 4 du réseau de communication et non représenté, après mise en communication des deux postes selon le protocole de mise en communication en mode circuit en vigueur pour des communications vocales au moyen d'un réseau téléphonique commuté.

Cette dépose peut également être réalisée par un utilisateur distant via la même liaison de communication 3 à partir d'un ordinateur relié au sous-ensemble 5 du réseau de communication 2, éventuellement via le sous-ensemble 4. Le protocole utilisé pour la transmission des données correspondant aux signaux sonores constituant le message à déposer est alors de type paquet et par exemple de type Internet, il fait suite à une phase préalable d'appel du poste téléphonique 1 qui doit nécessairement s'effectuer selon le protocole de mise en communication téléphonique en vigueur pour les transmissions, soit via le réseau numérique à intégration de services, soit encore via le réseau analogique impliquant alors l'usage d'un modem au niveau du poste.

Les messages émis et/ou reçus par le poste téléphonique 1 via le coupleur téléphonique 17 et via le coupleur 18 n'ont pas même constitution dans la mesure où les uns sont émis et/ou reçus sous forme d'échantillons périodiquement transmis alors que les autres sont émis et/ou reçus en un ou éventuellement plusieurs paquets. L'enregistrement d'un message par le poste téléphonique 1 est susceptible d'être réalisé selon deux procédés différents suivant le mode de transmission par circuit ou par paquet qui est choisi, il s'effectue préférablement sous une même forme dans la mémoire 22 prévue pour recevoir les messages sonores, la conversion étant réalisée dans l'unité de traitement 14 en fonction des besoins sous le contrôle de celui des gestionnaires 20 ou 21 concerné.

Ceci permet donc à un utilisateur de réaliser une passerelle entre modes qui l'autorise à entrer en communication avec un poste téléphonique 1 qui lui est affecté sur un site distant de celui où il se trouve à l'aide d'un ordinateur doté de moyens lui permettant d'entrer en communication en mode paquet et par voie téléphonique avec ce poste 1 pour consulter les messages qui lui ont été déposés quelque soit celui des deux modes de communication par circuit ou par paquets utilisés pour leurs déposes respectives. Cette passerelle entre modes permet aussi à cet utilisateur de réaliser la même opération à partir d'un simple poste téléphonique mis en communication avec le poste 1 via le sous-ensemble 4 et la liaison de communication 3. Elle permet également à un utilisateur de déposer des messages sonores à l'aide du poste téléphonique 1 tant au niveau d'un autre poste téléphonique, qui est équipé en interne ou en externe d'une fonction répondeur-enregistreur et avec lequel le poste 1 communique en mode circuit, qu'au niveau d'un ordinateur doté de la même fonction et avec lequel il communique en mode paquet.

## Revendications

1. Equipement d'adaptation de protocole pour poste téléphonique comportant une unité de traitement (14) disposant de moyens matériels et logiciels agencés pour permettre au poste téléphonique de fonctionner selon un protocole de communication en mode circuit par l'intermédiaire d'une liaison de communication (3) d'un réseau téléphonique (4), caractérisé en ce qu'il comporte un coupleur (18) lui permettant de fonctionner en mode paquet via la liaison de communication en plus du coupleur (17) lui permettant de fonctionner en mode circuit, ces deux coupleurs étant reliés à ladite liaison de communication via un organe d'aiguillage sélectif (16) et étant régis par l'unité de traitement du poste qui dispose à cet effet de moyens incluant un gestionnaire de protocole en mode paquet (20) en plus d'un gestionnaire de protocole en mode circuit (19).

2. Equipement selon la revendication 1, caractérisé en ce qu'il comporte un coupleur (18) lui permettant de fonctionner en liaison avec un réseau numérique asynchrone de type Internet et un gestionnaire de protocole (20) correspondant.

3. Equipement selon l'une des revendications 1 et 2, caractérisé en ce qu'il comporte au moins une mémoire (22) de messages sonores incorporée ou non dans l'ensemble de mémoires de l'unité de traitement (14) du poste qui comporte cet équipement, ladite mémoire recevant préférablement sous une même forme les données de message sonore quel que soit le protocole mis en oeuvre et/ou à mettre en oeuvre pour leur transmission.

4. Poste téléphonique comportant une unité de traitement (14) disposant de moyens matériels et logiciels agencés pour permettre au poste téléphonique de fonctionner selon un protocole de communication en mode circuit par l'intermédiaire d'une liaison de communication (3) d'un réseau téléphonique (4), caractérisé en ce qu'il comporte un agencement selon au moins l'une quelconque des revendications 1 à 3.
